# FASCICULE DE BREVET EUROPEEN

(11) **EP 1 068 968 B1**
(45) Date de publication et mention de la délivrance du brevet: **19.01.2005**
(21) Numéro de dépôt: 00114834.5
(22) Date de dépôt: 11.07.2000
(51) Int. Cl.: B60H 1/32, B60H 1/00

(54) **Véhicule comprenant une installation de chauffage-climatisation**
Fahrzeug mit einer Heizungs-/Klimaanlage
A vehicle comprising a heating/air-conditioning system

(30) Priorité: 12.07.1999 FR 9908995
(43) Date de publication de la demande: 17.01.2001
(73) Titulaire: VALEO CLIMATISATION, 78321 La Verrière (FR)
(72) Inventeur: Frugier, Benjamin, 75015 Paris (FR); Grimaud, Laurent, 75017 Paris (FR); Elliot, Gilles, 91080 Courcouronnes (FR)
(74) Mandataire: Gérard, Michel

(56) Documents cités:
- EP-A- 0 566 854
- FR-A- 2 761 405
- US-A- 5 129 144
- US-A- 5 641 016

## Description

La présente invention concerne un véhicule comprenant une installation de chauffage et de climatisation qui comporte d'une part un appareil de chauffage/climatisation qui comprend, un radiateur de chauffage, un évaporateur ainsi qu'un dispositif de distribution d'air, lequel comporte classiquement des entrées d'air, un pulseur, et un système de volets commandés, et d'autre part un compresseur et un condenseur qui coopèrent fonctionnellement avec l'appareil de chauffage-climatisation.

Il a été suggéré d'utiliser des compresseurs entraînés par un moteur électrique pour dissocier le fonctionnement du compresseur du fonctionnement du moteur thermique, en particulier pour surmonter la dégradation des performances de climatisation qui est généralement constatée au ralenti. Cette technique, qui nécessite une source électrique puissante dans le véhicule, peut être mise en oeuvre dans le cadre du passage à une tension d'alimentation électrique de 42 V ou plus.

Il a également été suggéré notamment dans la Demande de Brevet français n° FR 2 761 405 déposée le 27 mars 1997 par la Demanderesse, d'utiliser, dans une boucle frigorifique pour climatisation de véhicule automobile, un condenseur refroidi par eau.

L'idée de base de la présente invention est de mettre à profit ces évolutions technologiques pour obtenir une compacité de la topologie de l'installation.

L'objet de l'invention est notamment de permettre un raccourcissement des canalisations et donc des pertes de charge plus faibles ainsi qu'une possibilité de réduire les pertes de réfrigérant, et/ou un gain du point de vue coût et/ou une souplesse accrue dans la mise au point thermique et acoustique de la boucle, étant donné que le nombre de facteurs extérieurs interférant avec la boucle est limité.

L'invention concerne ainsi un véhicule comprenant une installation de chauffage climatisation comprenant d'une part un appareil de chauffage et de climatisation qui comprend un radiateur, un évaporateur et un dispositif de distribution d'air, et d'autre part un compresseur et un condenseur coopérant fonctionnellement avec l'évaporateur pour former une boucle thermique caractérisé en ce que le compresseur est un compresseur électrique, en ce que le condenseur est refroidi par un circuit de refroidissement alimenté par un fluide autre que l'air, et en ce que le compresseur électrique et le condenseur sont logés dans un espace compris entre le plan vertical passant par l'axe des roues avant du véhicule, et le plan vertical passant par le dos des dossiers des sièges avant.

Avantageusement, le véhicule comporte un bloc fonctionnel, qui forme un système complet, qui peut être logé dans un boîtier, associant ledit appareil de chauffage et de climatisation, le compresseur électrique et le condenseur.

Le véhicule peut être caractérisé en ce que ledit circuit de refroidissement du condenseur présente un échangeur de refroidissement de fluide et au moins un échangeur de refroidissement d'au moins un module d'alimentation électrique, ce dernier échangeur étant disposé en amont du condenseur dans le sens de circulation du fluide dans le circuit de refroidissement. L'échangeur de refroidissement de fluide peut être un échangeur fluide caloporteur/air et le fluide caloporteur peut être de l'eau, ou bien un mélange d'eau et de glycol.

Le compresseur et le condenseur peuvent être logés sur la face du tablier du véhicule qui se trouve du côté du compartiment moteur, ou au voisinage de celle-ci.

Le radiateur de chauffage et le condenseur peuvent être regroupés en un seul échangeur dit échangeur intégré. Le véhicule peut alors comporter un module cockpit intégrant le compresseur électrique, ledit échangeur intégré et des sorties d'alimentation en fluide caloporteur de l'échangeur intégré.

Le véhicule peut comporter un circuit de mixage pourvu d'un volet de mixage pour diriger de l'air traversant l'évaporateur soit sous forme d'un flux d'air direct, soit sous forme d'un flux d'air dérivé sur l'échangeur intégré, soit sous forme d'un mixage entre ces deux flux.

D'autres caractéristiques et avantages de l'invention apparaîtront mieux à la lecture de la description qui va suivre, donnée à titre d'exemple non limitatif, en liaison avec les dessins dans lesquels :
- la figure 1 représente un exemple d'implantation d'une installation de chauffage/climatisation selon l'invention ;
- la figure 2 représente un premier mode de réalisation d'une bouche thermique mettant en oeuvre l'invention ;
- la figure 3 représente un deuxième mode de réalisation d'une boucle thermique mettant en oeuvre l'invention.
- les figures 4a et 4c représentent une intégration d'une installation selon l'invention dans un module cockpit.

Une boucle d'un dispositif de climatisation comporte classiquement un compresseur, un condenseur, une bouteille d'expansion pour le fluide frigorigène, un détendeur et un évaporateur.

De manière classique, un appareil de chauffage climatisation comprend l'évaporateur, un radiateur chauffé par de l'eau en liaison thermique avec le moteur, des entrées d'eau, un pulseur d'air, des sorties d'air, et un système de volets commandés pour gérer la circulation d'air entre les entrées (air extérieur et/ou air recirculé) et les sorties (distribution d'air en divers points de l'habitacle).

Les composants de la boucle thermique (compresseur, condenseur, bouteille d'expansion et détendeur) qui ne sont pas logés dans l'appareil de chauffage-climatisation constituent des éléments séparés qui sont assemblés lors du montage du véhicule en tenant compte des contraintes d'implantation, en particulier du compresseur et du condenseur, ce qui implique d'une part des longueurs de canalisations importantes générateurs de pertes de charge, et d'autre part des connexions aux extrémités de ces canalisations, qui sont autant de sources de fuites pour le liquide réfrigérant.

Selon l'invention, le compresseur est un compresseur électrique et le condenseur est refroidi par un fluide autre que l'air frais, disponible à l'avant du véhicule. Le condenseur est ainsi refroidi par une boucle de refroidissement dans laquelle circule un fluide caloporteur tel que l'eau ou un mélange d'eau et de glycol.

Le compresseur et le condenseur ainsi définis sont placés aussi près que possible de l'appareil de chauffage-climatisation, dans un espace disponible entre le plan vertical passant par l'axe des roues avant et le plan passant par le dos des dossiers des sièges avant. La définition de ces positions du compresseur et du condenseur inclut bien entendu le dessous de l'habitacle et surtout la face 11' du tablier 11 qui se trouve du côté du compartiment moteur 40. Une position possible est le compartiment moteur jusqu'aux axes des deux roues avant. Une autre position possible est l'habitacle lui-même, par la détermination des espaces disponibles dans la proximité de la planche de bord.

L'invention permet de construire une boucle thermique de longueur aussi faible que possible et qui peut être regroupée autour de l'évaporateur, d'où un raccourcissement des canalisations et donc un plus faible volume total de fluide réfrigérant, une diminution des pertes de charges et des dégradations de performances qui en résultent, ainsi qu'une réduction des coûts. La réduction de la longueur des canalisations et/ou du nombre de connexions peut également être une source de réduction des fuites de réfrigérant tout comme l'utilisation d'un compresseur électrique (hermétique). Le rapprochement géographique des composants permet également de préassembler des éléments de la boucle thermique, ce qui autorise la mise en oeuvre de connexions soudées et donc à étanchéité garantie, qu'il n'est pas envisageable de mettre en oeuvre sur une chaîne d'assemblage de véhicule.

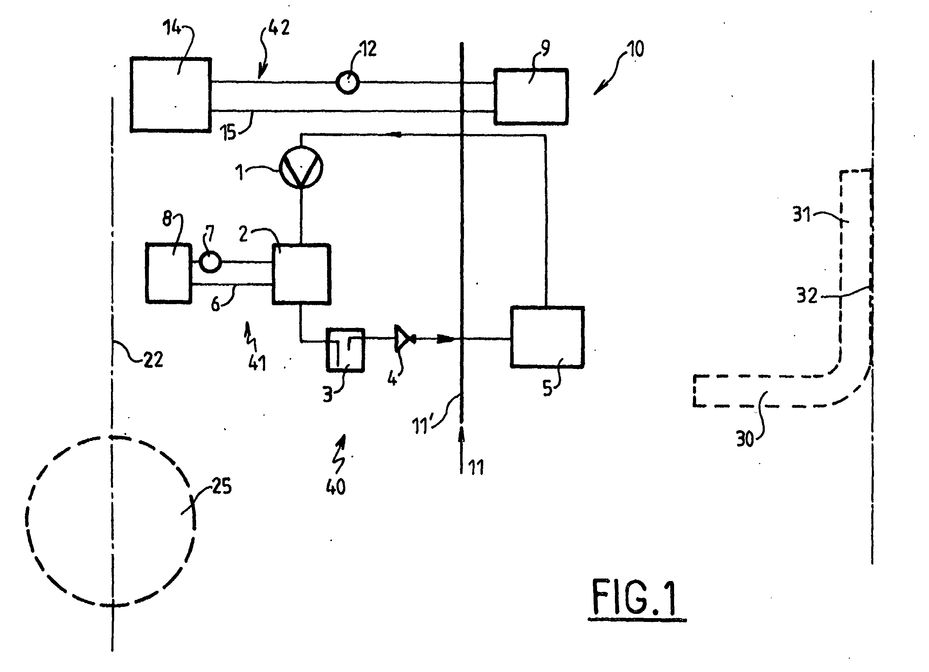

Si on se reporte à la figure 1, une boucle thermique de réfrigération comporte successivement un compresseur 1, un condenseur 2, une bouteille 3 constituant une réserve de fluide réfrigérant, un détendeur 4, et un évaporateur 5 dont la sortie alimente l'entrée du compresseur 1.

Le compresseur 1 est un compresseur électrique et le condenseur 2 est refroidi par un circuit 41 comprenant un radiateur 8. Une ligne 6 alimentée en mélange eau-glycol, qui y circule grâce à une pompe à eau 7 permet d'associer le transfert des calories du condenseur 2 vers le radiateur 8.

L'appareil de climatisation 10 est logé dans l'habitacle de véhicule, à l'intérieur de la console. Il présente un pulseur, l'évaporateur 5, un radiateur de chauffage 9, ainsi que des entrées et sorties d'air et un système de volets non représentés.

Le compresseur électrique 1, le condenseur 2, la bouteille 3 et le détendeur 4 (ou un orifice calibré qui en fait office) sont disposés sur la face du tablier 11 qui est située côté compartiment moteur. On voit qu'ainsi la boucle qui parcourt le fluide réfrigérant présente une longueur réduite.

Le radiateur de chauffage 9 de l'habitacle est disposé dans l'appareil de climatisation et il est chauffé par un circuit 42 alimenté en eau de refroidissement, par exemple l'eau de refroidissement du moteur thermique du véhicule, grâce par exemple à une pompe de circulation 12 reliée au radiateur 14 du véhicule par un circuit de circulation 15.

D'une manière générale, il est possible de disposer le compresseur électrique 1, le condenseur 2, la bouteille 3 et le détendeur 4 dans l'espace compris entre le plan vertical 22 passant par l'axe des roues avant 25 du véhicule, et le plan vertical 32 passant par le dos des dossiers 31 des sièges avant 30.

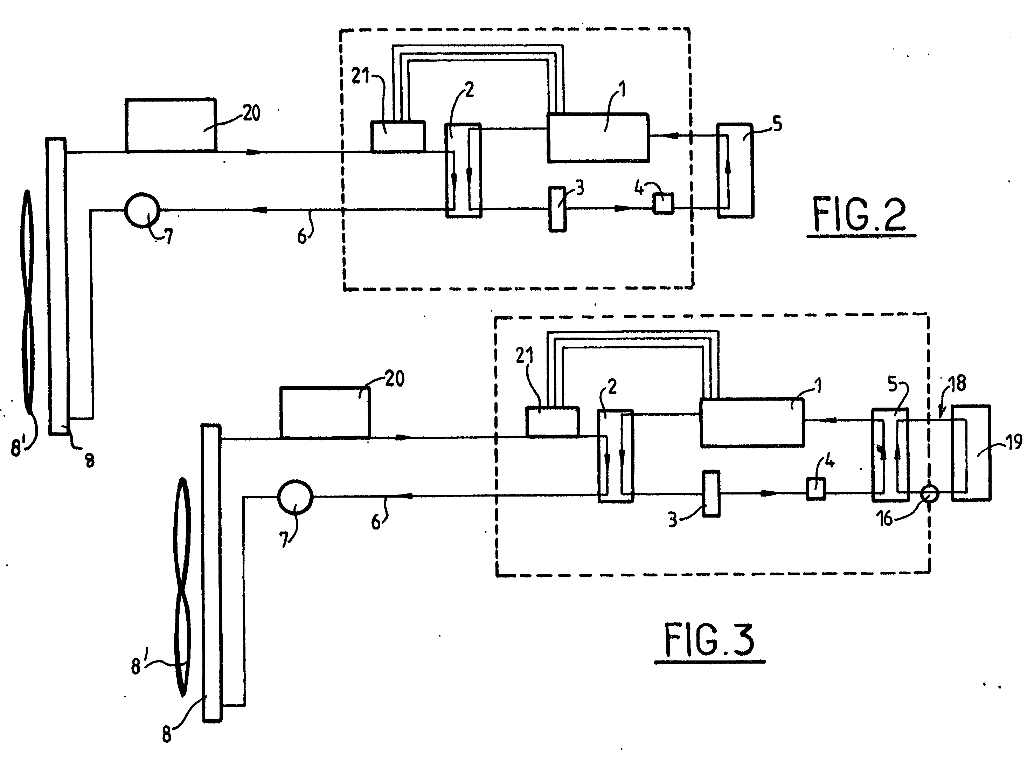

En référence à la figure 2, on voit que le condenseur est refroidi par une boucle de refroidissement 6 comprenant une pompe 7, un radiateur 8, un ventilateur 8' associé au radiateur 8. Cette boucle de refroidissement est préférentiellement utilisée pour refroidir également l'électronique 20 d'alimentation du véhicule en 42 V et le module 21 (onduleur) d'alimentation électrique du compresseur électrique 1, ce refroidissement s'opérant avantageusement en amont du condenseur 2 dans le sens de circulation du fluide (par exemple eau + glycol) dans la boucle. La boucle de refroidissement 6 constitue un circuit d'eau dit "à basse température", qui fournit une eau de refroidissement à une température inférieure à 70° C c'est-à-dire une température suffisamment basse pour permettre un refroidissement de l'électronique.

Le système représenté à la figure 2 permet de livrer un système complet sous forme de module pré-assemblé (appareil de chauffage/ climatisation, compresseur, condenseur, et éventuellement bouteille), qui peut être déposé dans un boîtier de préférence hermétique, ce qui permet d'assurer une bonne maîtrise des problèmes de bruit et/ou des fuites d'un fluide frigorigène, ainsi qu'une protection thermique vis-à-vis de l'environnement moteur.

Le bloc ou module pré-assemblé peut comporter un élément de structure du véhicule et/ou une colonne de direction et/ou un sac gonflable et/ou un pédalier et/ou un moteur et des organes d'entraînement des essuie-glaces du véhicule, et/ou un séparateur d'eau pour une entrée d'air dans l'habitacle et/ou au moins un boîtier de filtre de purificateur d'air et/ ou au moins un élément d'affichage.

Dans le mode de réalisation de la figure 3, l'évaporateur 5 est en liaison thermique avec un échangeur air-eau 15 par l'intermédiaire d'un circuit fermé 18 de circulation d'eau présentant une pompe 16.

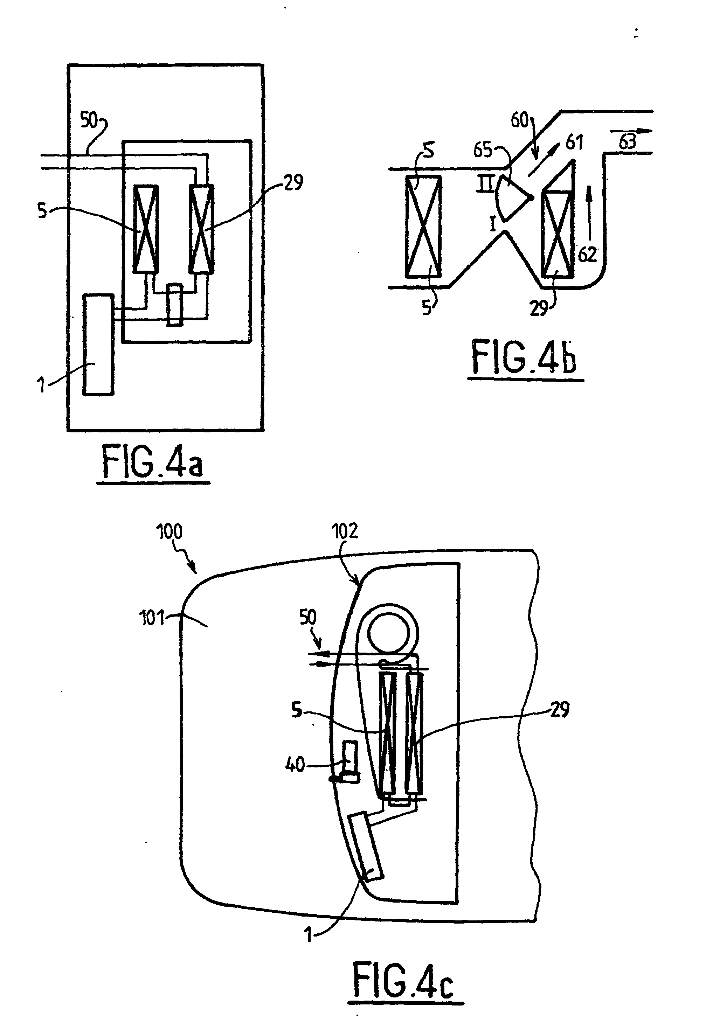

Du fait que l'invention permet de regrouper géographiquement les éléments de l'installation de chauffage-climatisation, il est possible de regrouper en un seul échangeur le radiateur de chauffage 9 et le condenseur 2 qui sont l'un et l'autre refroidis par un fluide caloporteur tel que l'eau. En effet, le radiateur de chauffage 9 ne fonctionne que par temps froid ou pour déshumidifier et le condenseur 2 ne fonctionne que par temps chaud ou pour déshumidifier. Un échangeur 29 (dit « échangeur intégré ») regroupant le radiateur de chauffage 9 et le condenseur 2 peut fonctionner dans tous les modes en aiguillant de manière appropriée les fluides frigorigènes et/ou caloporteur. Ceci permet en outre de se dispenser d'un des circuits 41 et 42. Ceci permet une intégration dans un module cockpit qui est illustrée aux figures 4a à 4c. L'évaporateur 5 et l'échangeur intégré 29 sont regroupés dans un module comprenant également au moins le compresseur électrique 1 (figure 4a), et des sorties 50 de refroidissement de l'échangeur 29.

Ce module cockpit intègre (figure 4b) un avant 60 de distribution d'air comprenant un volet de mixage 65. Le flux d'air issu de l'évaporateur 5 est dirigé sous forme d'un flux d'air direct 61, ou sous forme d'un flux dérivé 62 qui traverse l'échangeur 29. Dans des positions intermédiaires du volet 61 (mixage sur l'air) le flux d'air direct 61 et le flux d'air dérivé 62 se mélangent pour former un flux recombiné 63. Il y ainsi trois modes de fonctionnement. Par temps chaud (climatisation), le volet 65 est dans sa position I et tout l'air traversant l'évaporateur devient un flux d'air direct 61. Par temps intermédiaire (mode mixage sur l'air), le volet 61 est dans une position de mixage et le flux d'air issu de l'évaporateur se sépare en un flux d'air direct 61 et un flux d'air dérivé 62 qui se recombinent en un flux d'air recombiné 63. Par temps froid, la climatisation est inactive et l'échangeur 29 sert de radiateur de chauffage. Le volet est alors dans sa position II et tout l'air qui traverse l'évaporateur 5 (qui est inactif) traverse l'échangeur 29, qui fait alors fonction de radiateur de chauffage.

L'invention s'applique également au cas des autobus ou des camions pour lesquels plusieurs boucles d'air conditionné peuvent être mises en parallèle sur un circuit principal en eau, ce qui fait qu'il y a dans ce cas un seul circuit d'eau pour n circuits d'air conditionné.

## Revendications

1. Véhicule comprenant une installation de chauffage-climatisation comprenant d'une part un appareil de chauffage et de climatisation qui comprend un radiateur de chauffage, un évaporateur et un dispositif de distribution d'air, et d'autre part un compresseur et un condenseur coopérant fonctionnellement avec l'évaporateur pour former une boucle thermique **caractérisé en ce que** le compresseur (1) est un compresseur électrique, **en ce que** le condenseur (2) est refroidi par un circuit de refroidissement (6, 7, 8) alimenté par un fluide caloporteur autre que l'air, et **en ce que** le compresseur électrique (1) et le condenseur (2) sont logés dans un espace compris entre le plan vertical (22) passant par l'axe des roues avant (25) du véhicule, et le plan vertical (32) passant par le dos des dossiers des sièges avant (30) du véhicule.

2. Véhicule selon la revendication 1, **caractérisé en ce qu'**il comporte un bloc pré-assemblé associant ledit appareil de chauffage-climatisation, le compresseur électrique et le condenseur.

3. Véhicule selon la revendication 2, **caractérisé en ce que** ledit bloc pré-assemblé est disposé dans un boîtier.

4. Véhicule selon une des revendications 2 ou 3, **caractérisé en ce que** le bloc pré-assemblé comporte un élément de structure des véhicules et/ou une colonne de direction et/ou un sac gonflable et/ou un moteur et des organes d'entraînement d'essuie-glaces, et/ou un séparateur d'eau pour une entrée d'air dans l'habitacle et/ou au moins un boîtier de filtre du purificateur d'air et/ou au moins un élément d'affichage.

5. Véhicule selon une des revendications précédentes, **caractérisé en ce que** ledit circuit de refroidissement du condenseur (2) présente un échangeur (8) de refroidissement dudit fluide caloporteur et au moins un échangeur de refroidissement (20) d'au moins un module d'alimentation électrique (21), ce dernier échangeur (20) étant disposé en amont du condenseur (2) dans le sens de circulation du fluide dans le circuit de refroidissement.

6. Véhicule selon la revendication 5, **caractérisé en ce que** ledit échangeur de refroidissement de fluide (8) est un échangeur fluide caloporteur /air.

7. Véhicule selon une des revendications précédentes, **caractérisé en ce que** ledit fluide caloporteur est de l'eau, ou un mélange d'eau et de glycol.

8. Véhicule selon une des revendications précédentes, **caractérisé en ce que** le compresseur (1) et le condenseur (2) sont logés sur la face (11') du tablier (11) du véhicule qui se trouve du côté du compartiment moteur (40) ou au voisinage de celle-ci.

9. Véhicule selon une des revendications 1 à 4, **caractérisé en ce que** le radiateur de chauffage (9) est le condenseur (2) sont regroupés en un seul échangeur intégré (29).

10. Véhicule selon la revendication 9, **caractérisé en ce qu'**il comprend un module cockpit intégrant le compresseur électrique (1), l'évaporateur (5), l'échangeur intégré (29) et des sorties d'alimentation dudit échangeur intégré (50) en fluide caloporteur.

11. Véhicule selon une des revendications 9 ou 10, **caractérisé en ce qu'**il comporte un circuit de mixage pourvu d'un volet de mixage (65) pour diriger de l'air traversant l'évaporateur (5) soit sous forme d'un flux d'air direct (61), soit sous forme d'un flux d'air dérivé (62) vers ledit échangeur intégré (29), soit sous forme d'un mixage (63) entre ces deux flux (61, 62).

## Claims

1. A vehicle comprising a heating/air conditioning installation comprising on the one hand a heating and air conditioning apparatus which comprises a heating radiator, an evaporator and an air distribution device, and on the other hand a compressor and a condenser cooperating functionally with the evaporator to form a thermal loop, **characterised in that** the compressor (1) is an electric compressor, **in that** the condenser (2) is cooled by a cooling circuit (6, 7, 8) supplied with a heat-conducting fluid other than air, and **in that** the electric compressor (1) and the condenser (2) are housed in a space between the vertical plane (22) passing through the axis of the front wheels (25) of the vehicle and the vertical plane (32) passing through the back of the backs of the front seats (30) of the vehicle.

2. A vehicle according to Claim 1, **characterised in that** it comprises a pre-assembled unit combining said heating/air conditioning apparatus, the electric compressor and the condenser.

3. A vehicle according to Claim 2, **characterised in that** said pre-assembled unit is disposed in a housing.

4. A vehicle according to either of Claims 2 or 3, **characterised in that** the pre-assembled unit comprises a vehicle structural element and/or a steering column and/or an air bag and/or a windscreen wiper motor and drive members and/or a water separator for an air inlet into the passenger compartment and/or at least one filter housing of the air cleaner and/or at least one display element.

5. A vehicle according to one of the preceding claims, **characterised in that** said cooling circuit of the condenser (2) has an exchanger (8) for cooling said heat-conducting fluid and at least one exchanger (20) for cooling at least one electrical supply module (21), the latter exchanger (20) being disposed upstream of the condenser (2) in the direction of circulation of the fluid in the cooling circuit.

6. A vehicle according to Claim 5, **characterised in that** said fluid cooling exchanger (8) is a heat-conducting fluid/air exchanger.

7. A vehicle according to one of the preceding claims, **characterised in that** said heat-conducting fluid is water, or a mixture of water and glycol.

8. A vehicle according to one of the preceding claims, **characterised in that** the compressor (1) and the condenser (2) are housed on the face (11') of the bulkhead (11) of the vehicle which is situated on the same side as the engine compartment (4) or in the vicinity of said face.

9. A vehicle according to one of Claims 1 to 4, **characterised in that** the heating radiator (9) and the condenser (2) are grouped together in a single integrated exchanger (29).

10. A vehicle according to Claim 9, **characterised in that** it comprises a cockpit module integrating the electric compressor (1), the evaporator (5), the integrated exchanger (29) and outputs supplying said integrated exchanger (50) with heat-conducting fluid.

11. A vehicle according to either of Claims 9 or 10, **characterised in that** it comprises a mixing circuit provided with a mixing flap (65) for directing air passing through the evaporator (5) either in the form of a direct air flow (61), or in the form of an air flow (62) diverted to said integrated exchanger (29), or in the form of a mixing (63) between these two flows (61, 62).

## Patentansprüche

1. Fahrzeug mit einer Heiz-/Klimatisierungsanlage, enthaltend einerseits eine Heiz- und Klimatisierungseinrichtung, die einen Heizkörper, einen Verdampfer und eine Luftverteilvorrichtung aufweist, und andererseits einen Kompressor und einen Kondensator, die funktionsmäßig mit dem Verdampfer zusammenwirken, um eine thermische Schleife zu bilden, **dadurch gekennzeichnet, dass** der Kompressor (1) ein elektrischer Kompressor ist, dass der Kondensator (2) über einen Kühlkreis (6, 7, 8) abgekühlt wird, der mit einem anderen Kühlmittel als Luft gespeist wird, und dass der elektrische Kompressor (1) und der Kondensator (2) in einem Raum aufgenommen sind, der zwischen einer durch die Achse der Vorderräder (25) des Fahrzeugs verlaufenden senkrechten Ebene (22) und der durch die Rückseite der Rückenlehnen der Vordersitze (30) des Fahrzeugs verlaufenden senkrechten Ebene (32) liegt.

2. Fahrzeug nach Anspruch 1, **dadurch gekennzeichnet, dass** es einen vormontierten Block enthält, welcher die Heiz-/Klimatisierungseinrichtung, den elektrischen Kompressor und den Kondensator verbindet.

3. Fahrzeug nach Anspruch 2, **dadurch gekennzeichnet, dass** der vormontierte Block in einem Gehäuse angeordnet ist.

4. Fahrzeug nach einem der Ansprüche 2 oder 3, **dadurch gekennzeichnet, dass** der vormontierte Block ein Fahrzeugaufbauteil und/oder eine Lenksäule und/oder einen Airbag und/oder einen Motor und Scheibenwischerantriebsglieder und/oder einen Wasserabscheider für einen Lufteinlass in den Fahrgastraum und/oder zumindest ein Filtergehäuse des Luftreinigers und/oder zumindest ein Anzeigeelement enthält.

5. Fahrzeug nach einem der vorangehenden Ansprüche, **dadurch gekennzeichnet, dass** der Kühlkreis zum Abkühlen des Kondensators (2) einen Tauscher (8) zum Abkühlen des genanten Kühlmittels und zumindest einen Tauscher (20) zum Abkühlen zumindest eines Stromversorgungsmoduls (21) aufweist, wobei dieser Tauscher (20) dem Kondensator (2) in Kühlmittelumlaufrichtung des Kühlkreises vorgelagert ist.

6. Fahrzeug nach Anspruch 5, **dadurch gekennzeichnet, dass** der Tauscher (8) für das Kühlmittel ein Kühlmittel-/Lufttauscher ist.

7. Fahrzeug nach einem der vorangehenden Ansprüche, **dadurch gekennzeichnet, dass** das Kühlmittel Wasser oder ein Gemisch aus Wasser und Glykol ist.

8. Fahrzeug nach einem der vorangehenden Ansprüche, **dadurch gekennzeichnet, dass** der Kompressor (1) und der Kondensator (2) an der Vorderseite der Stirnwand (11) des Fahrzeugs aufgenommen sind, die sich auf der Seite des Motorraums (40) oder in dessen Nachbarschaft befindet.

9. Fahrzeug nach einem der Ansprüche 1 bis 4, **dadurch gekennzeichnet, dass** der Heizkörper (9) und der Kondensator (2) in einem einzigen Einbautauscher (29) zusammengefasst sind.

10. Fahrzeug nach Anspruch 9, **dadurch gekennzeichnet, dass** es ein Cockpitmodul enthält, welches den elektrischen Kompressor (1), den Verdampfer (5), den Einbautauscher (29) und Ausgänge zum Versorgen des Einbautauschers (50) mit Kühlmittel eingliedert.

11. Fahrzeug nach einem der Ansprüche 9 oder 10, **dadurch gekennzeichnet, dass** es einen Mischkreis enthält, der mit einer Mischklappe (65) versehen ist, um die den Verdampfer (5) durchströmende Luft entweder in Form eines direkten Luftstroms (61) oder in Form eines abgeleiteten Luftstroms (62) oder aber in Form eines Gemischs dieser beiden Ströme (61, 62) zum Einbautauscher (29) zu lenken.
